# EUROPEAN PATENT APPLICATION

(11) **EP 4 307 177 A1**
(43) Date of publication of application: **17.01.2024**
(21) Application number: 22766765.6
(22) Date of filing: 16.02.2022
(51) Int. Cl.: G06N 3/08

(54) **INFORMATION PROCESSING DEVICE, INFORMATION PROCESSING SYSTEM, INFORMATION PROCESSING METHOD, AND RECORDING MEDIUM**

(30) Priority: 10.03.2021 JP 2021038394
(71) Applicant: Sony Semiconductor Solutions Corporation, Atsugi-shi, Kanagawa 243-0014 (JP)
(72) Inventor: ISHIKAWA, Hirotaka, Atsugi-shi, Kanagawa 243-0014 (JP); YONEZAWA, Kota, Atsugi-shi, Kanagawa 243-0014 (JP)
(74) Representative: MFG Patentanwälte Meyer-Wildhagen Meggle-Freund Gerhard PartG mbB
(86) International application number: PCT/JP2022/006266
(87) International publication number: WO 2022/190801

(57) **Abstract**

An edge device (20) that is an example of an information processing device of an embodiment according to the present disclosure includes a transmitting section that transmits, to a server device (10) that generates a neural network, information related to a processing capability for processing the neural network supplied from the server device (10), wherein the information related to the processing capability includes at least one of capacity information of the neural network, filter size information of a favorite convolutional neural network, hardware architecture type information, chip information, and device model number information.

## Description

### Field

The present disclosure relates to an information processing device, an information processing system, an information processing method, and a recording medium.

### Background

In deep learning, a technology in the following manner has been developed. That is, as in a one-for-all technology, once a large-scale neural network is learned, a plurality of learned small-scale neural networks can be extracted therefrom. Such a technology can instantaneously generate learned neural networks suitable for edge artificial intelligence (AI) devices having various capabilities.

Note that before development of the once-for-all technology, it is necessary for a human to design a neural network for each of the edge AI devices, and to cause each of the neural networks to be learned from the beginning. On the other hand, in the once-for-all technology, it is not necessary for a human to design a neural network, and time of causing the neural network to be learned from the beginning is not necessary.

### Citation List

### Patent Literature

Patent Literature 1: Japanese Patent Application Laid-open No. 2020-123830
Patent Literature 2: Japanese Patent Application Laid-open No. 2018-73024

### Summary

### Technical Problem

In the above-described once-for-all technology, although a learned neural network can be instantaneously generated, it is not clear which scale of a neural network is to be sent to an edge AI device to extract a capability of the edge AI device to the maximum. Thus, a neural network of an insufficient scale is sent to the edge AI device, and it is difficult to sufficiently derive device performance of the edge AI device or the like.

Thus, the present disclosure proposes an information processing device, an information processing system, an information processing method, and a recording medium capable of sufficiently deriving the device performance.

### Solution to Problem

An information processing device according to the embodiment of the present disclosure includes: a transmitting section that transmits, to a server device that generates a neural network, information related to a processing capability for processing the neural network supplied from the server device.

An information processing device according to the embodiment of the present disclosure includes: a receiving section that receives information related to a processing capability of an edge device for processing a neural network; a generating section that generates the neural network suitable for the edge device on a basis of the received information related to the processing capability; and a transmitting section that transmits the generated neural network to the edge device.

An information processing system according to the embodiment of the present disclosure includes: an edge device that transmits information related to a processing capability for processing a neural network; and a server device that receives the information related to the processing capability, generates the neural network suitable for the edge device on a basis of the received information related to the processing capability, and transmits the generated neural network to the edge device.

An information processing method according to the embodiment of the present disclosure includes: transmitting information related to a processing capability for processing a neural network, the transmitting being performed by an edge device; and receiving the information related to the processing capability, generating the neural network suitable for the edge device on a basis of the received information related to the processing capability, and transmitting the generated neural network to the edge device, the receiving, generating, and transmitting being performed by a server device.

A computer-readable recording medium according to the embodiment of the present disclosure recording a program for causing a computer to execute transmitting information related to a processing capability for processing a neural network to a server device that generates the neural network.

A computer-readable recording medium according to the embodiment of the present disclosure recording a program for causing a computer to execute receiving information related to a processing capability of an edge device that processes a neural network;
generating the neural network suitable for the edge device on a basis of the received information related to the processing capability; and transmitting the generated neural network to the edge device.

### Brief Description of Drawings

FIG. 1 is a diagram depicting an example of a schematic configuration of an information processing system according to a first embodiment.
FIG. 2 is a diagram depicting an example of a schematic configuration of a server device according to the first embodiment.
FIG. 3 is a diagram depicting an example of a schematic configuration of an edge device according to the first embodiment.
FIG. 4 is a diagram for describing "SetSceneMode" of a NICE standard according to the first embodiment.
FIG. 5 is a diagram for describing "SetSceneData" of the NICE standard according to the first embodiment.
FIG. 6 is a flowchart depicting an example of a processing flow according to the first embodiment.
FIG. 7 is a flowchart depicting an example of a processing flow of the server device according to the first embodiment.
FIG. 8 is a flowchart depicting an example of a processing flow of the edge device according to the first embodiment.
FIG. 9 is a flowchart depicting an example of a processing flow according to a second embodiment.
FIG. 10 is a flowchart depicting a modification example of a processing flow according to the second embodiment.
FIG. 11 is a flowchart depicting an example of a processing flow according to a third embodiment.
FIG. 12 is a flowchart depicting an example of a processing flow according to a fourth embodiment.
FIG. 13 is a flowchart depicting an example of a processing flow according to a fifth embodiment.
FIG. 14 is a block diagram depicting an example of schematic configuration of a vehicle control system.
FIG. 15 is a diagram of assistance in explaining an example of installation positions of an outside-vehicle information detecting section and an imaging section.

### Description of Embodiments

In the following, embodiments of the present disclosure will be described in detail on the basis of the drawings. Note that a device, a system, a method, a recording medium, and the like according to the present disclosure are not limited by these embodiments. Also, in each of the following embodiments, overlapped description is omitted by assignment of the same reference sign to parts that are basically the same.

Each of one or a plurality of embodiments (including examples and modification examples) described in the following can be performed independently. On the other hand, at least a part of the plurality of embodiments described in the following may be appropriately combined with at least a part of the other embodiments. The plurality of embodiments may include novel features different from each other. Thus, the plurality of embodiments can contribute to solving objects or problems different from each other, and can exhibit effects different from each other.

The present disclosure will be described in the following order of items.

### 1. First embodiment

1-1. Example of a schematic configuration of an information processing system
1-2. Example of a schematic configuration of a server device
1-3. Example of a schematic configuration of an edge device
1-4. Example of a communication standard between devices
1-5. Example of a processing flow
1-6. Example of a processing flow of the server device
1-7. Example of a processing flow of the edge device
1-8. Action/effect
2. Second embodiment
2-1. Example of a processing flow
2-2. Modification example of a processing flow
2-3. Action/effect
3. Third embodiment
3-1. Example of a processing flow
3-2. Action/effect
4. Fourth embodiment
4-1. Example of a processing flow
4-2. Action/effect
5. Fifth embodiment
5-1. Example of a processing flow
5-2. Action/effect
6. Other embodiments
7. Application example
8. Appendix

### <1. First embodiment>

### <1-1. Example of a schematic configuration of an information processing system>

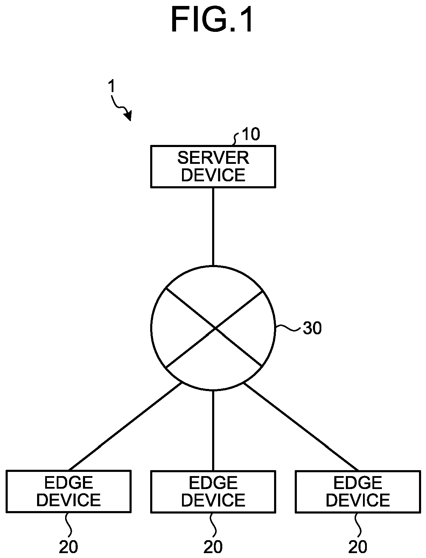

An example of a schematic configuration of an information processing system 1 according to the first embodiment will be described with reference to FIG. 1. FIG. 1 is a diagram depicting the example of the schematic configuration of the information processing system 1 according to the first embodiment.

As depicted in FIG. 1, the information processing system 1 includes a server device 10 and a plurality of edge devices 20. The server device 10 and each of the edge devices 20 are communicably connected via a communication network 30 of both or one of wired and wireless manners. As the communication network 30, for example, the Internet, a home network, a local area network (LAN), a satellite communication network, or the like can be used. Each of the server device 10 and the edge devices 20 corresponds to an information processing device.

The server device 10 receives various kinds of information from each of the edge devices 20, and transmits various kinds of information to each of the edge devices 20. Furthermore, the server device 10 generates and transmits a neural network suitable for each of the edge devices 20. The server device 10 is, for example, a computer device, and may be realized by hardware such as a central processing unit (CPU), a read only memory (ROM), and a random access memory (RAM).

the edge devices 20 obtains sensing data (such as an image, a sound, or the like) of a surrounding environment in which the edge device 20 is installed, and performs various kinds of processing on the obtained sensing data. In addition, the edge device 20 transmits data of a processing result to an external device such as the server device 10. Note that although the number of edge devices 20 is three in the example of FIG. 1, the number is not limited and may be one or more.

Such edge devices 20 are realized by, for example, edge AI devices having an artificial intelligence (AI) function. As the edge AI devices, the edge AI devices such as a camera and a microphone having the AI function can be used. Examples of the camera include a camera of a mobile terminal, a camera of a drive recorder, and a network camera. In a case where this camera is used, sensing data is an image.

For example, the camera is mounted on a smartphone carried by a user, mounted on a mobile body such as an automobile, or installed as a monitoring camera at home, in a store, or the like. An imaging device such as a camera collects light from a subject placed in a periphery and forms an optical image on an imaging surface, and obtains an image by converting the optical image formed on the imaging surface into an electric image signal. Note that examples of the mobile body include, in addition to the automobile, a motorcycle, a bicycle, personal mobility, an airplane, a drone, a ship, a robot (mobile robot), a construction machine, an agricultural machine (tractor), and the like.

### <1-2. Example of a schematic configuration of a server device>

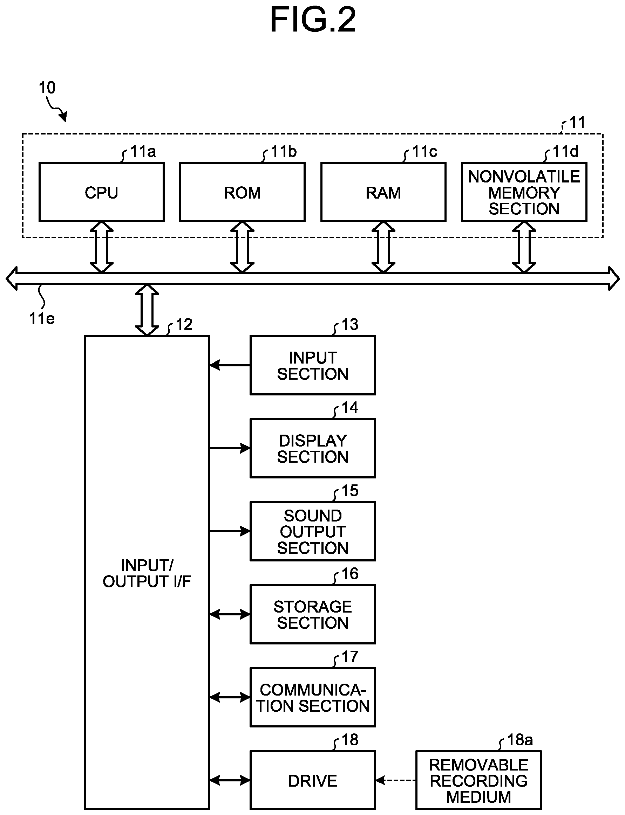

An example of a schematic configuration of the server device 10 according to the first embodiment will be described with reference to FIG. 2. FIG. 2 is a diagram depicting the example of the schematic configuration of the server device 10 according to the first embodiment.

The server device 10 includes a control section 11, an input/output interface (I/F) 12, an input section 13, a display section 14, a sound output section 15, a storage section 16, a communication section 17, and a drive 18. The control section 11 corresponds to a generating section, and a communication section 24 corresponds to a transmitting section and a receiving section.

The control section 11 includes a CPU 11a, a ROM 11b, a RAM 11c, and a nonvolatile memory section 11d. The CPU 11a, the ROM 11b, the RAM 11c, and the nonvolatile memory section 11d are connected to each another via a bus 11e. An input/output interface 12 is also connected to the bus 11e.

The CPU 11a executes various kinds of processing in accordance with a program stored in the ROM 11b, the nonvolatile memory section 11d (such as electrically erasable programmable read-only memory (EEP-ROM)), or the like, or a program loaded from the storage section 16 to the RAM 11c. Furthermore, the RAM 11c appropriately stores data and the like necessary for the CPU 11a to execute various kinds of processing.

For example, the control section 11 generates a neural network having a scale suitable for performance (processing capability) of the edge device 20 by using the once-for-all technology. Then, the control section 11 transmits the generated neural network to the edge device 20 by the communication section 17. Note that the once-for-all technology related to deep learning is a technology capable of extracting a plurality of learned small-scale neural networks (subset neural networks) from a large-scale neural network when the large-scale neural network is learned once.

The input section 13 including an operator and an operating device is connected to the input/output interface 12. For example, as the input section 13, various operators and operating devices such as a keyboard, a mouse, a key, a dial, a touch panel, a touch pad, and a remote controller are used. An operation by the user is detected by the input section 13, and a signal corresponding to the input operation is interpreted by the CPU 11a.

Furthermore, the display section 14 such as a liquid crystal display (LCD) or an organic electroluminescence (EL) panel, and the sound output section 15 such as a speaker are integrally or separately connected to the input/output interface 12.

The display section 14 is a display device that performs various displays, and includes, for example, a display device provided in a housing of the server device 10, a separate display device connected to the server device 10, or the like. The display section 14 displays images for various kinds of image processing, moving images to be processed, and the like on a display screen on the basis of an instruction from the CPU 11a. In addition, on the basis of an instruction from the CPU 11a, the display section 14 displays various operation menus, icons, messages, and the like, that is, performs a display as a graphical user interface (GUI).

Furthermore, for example, a storage section 16 such as a solid memory such as a hard disk drive (HDD) or a solid state drive (SSD), and a communication section 17 such as a modem are connected to the input/output interface 12.

The communication section 17 performs communication processing via a transmission path such as the Internet, wired/wireless communication with various devices, communication by bus communication, or the like.

Furthermore, a drive 18 is connected to the input/output interface 12 as necessary. A removable recording medium 18a such as a magnetic disk, an optical disk, a magneto-optical disk, or a semiconductor memory is appropriately mounted on the drive 18.

The drive 18 can read a data file such as an image file, various computer programs, and the like from the removable recording medium 18a. The read data file is stored in the storage section 16, and an image and a sound included in the data file are output by the display section 14 and the sound output section 15. Furthermore, the computer program and the like read from the removable recording medium 18a are installed in the storage section 16 as necessary.

In such a server device 10, for example, software for the processing according to the present embodiment can be installed via network communication by the communication section 17 or via the removable recording medium 18a. Alternatively, the software may be stored in advance in the ROM 11b, the storage section 16, or the like.

Note that each of functional sections such as the control section 11 may be configured by both or one of hardware and software as described above. These configurations are not specifically limited. For example, each of the above-described functional sections may be realized when a computer such as the CPU or a micro processing unit (MPU) executes a program, which is stored in advance in the ROM, by using the RAM or the like as a work area. Also, each of the functional sections may be realized by, for example, an integrated circuit such as an application specific integrated circuit (ASIC) or a field programmable gate array (FPGA). Furthermore, the server device 10 may be realized by, for example, cloud computing.

### <1-3. Example of a schematic configuration of an edge device>

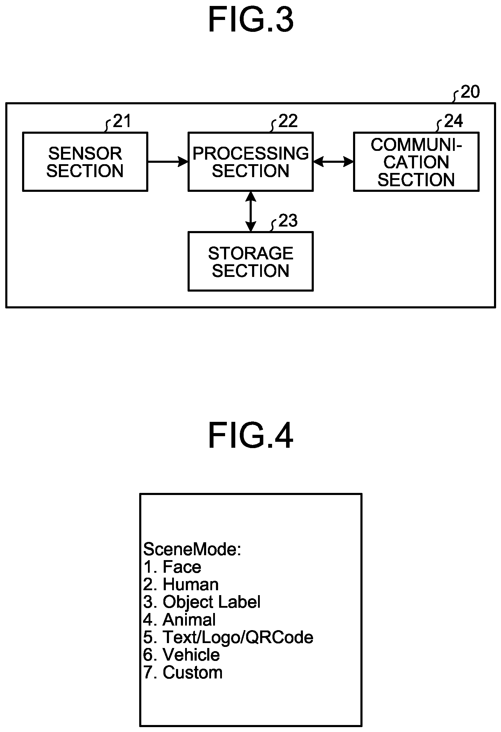

An example of a schematic configuration of the edge devices 20 according to the first embodiment will be described with reference to FIG. 3. FIG. 3 is a diagram depicting the example of the schematic configuration of the edge device 20 according to the first embodiment.

The edge device 20 includes a sensor section 21, a processing section 22, a storage section 23, and a communication section 24. The processing section 22 corresponds to a processing section and a measuring section, and the communication section 24 corresponds to a transmitting section and a receiving section.

The sensor section 21 obtains sensing data and outputs the obtained sensing data to the processing section 22. For example, in a case where the edge device 20 is an imaging device, the sensor section 21 includes imaging optical systems such as a photographing lens and a zoom lens that collect light emitted from a subject, and an imaging element such as a charge coupled device (CCD) image sensor or a complementary metal oxide semiconductor (CMOS) image sensor.

Furthermore, the sensor section 21 may be configured to have a subject recognizing function. For example, in a case where a function of recognizing a type of an imaged object is included as the subject recognizing function, the sensor section 21 may output information indicating a recognition result as the sensing data. For example, the sensor section 21 outputs text data indicating the type of the recognized object as the sensing data. Alternatively, as the subject recognizing function, a function of counting the number of designated objects or a function of counting the number of people in a specific state (for example, the number of people who are speaking, and the like) may be included. In this case, text data indicating the number of objects and the number of people may be output as the sensing data.

Furthermore, the sensor section 21 may include a time of flight (ToF) sensor as a depth sensor (ranging sensor) in addition to the imaging device. The ToF sensor can obtain shape information (depth information/image) such as a distance and unevenness between the ToF sensor and the subject by directly or indirectly measuring a return time of reflected light from the subject.

Furthermore, the sensor section 21 may include a positioning sensor such as an infrared (IR) camera or a global navigation satellite system (GNSS) sensor, a temperature sensor, a sound collecting device (microphone), a barometric pressure sensor, a humidity sensor, a wind direction/wind speed sensor, a sunshine sensor, a precipitation amount sensor, a water level sensor, a seismic intensity sensor (sensor that detects seismic intensity of an earthquake), and the like. The sensor section 21 is not specifically limited as long as the sensing data can be obtained from the surrounding environment (sensing environment). Note that the sensor section 21 may be fixed and provided in the edge device 20 or may be detachably provided with respect to the edge device 20.

The processing section 22 includes, for example, a processing circuit such as a CPU or a graphics processing unit (GPU), and a microcomputer including a ROM, a RAM, and the like. The processing section 22 functions as a control section that performs overall control of the edge device 20, for example, by executing processing based on a program stored in a storage device such as the ROM. In addition, the processing section 22 has a function of processing the sensing data obtained by the sensor section 21 and generating distribution data.

For example, when a neural network is received from the server device 10 by the communication section 24, the processing section 22 processes the neural network. At this time, the processing section 22 measures a processing time (processing speed) of the neural network. Then, the processing section 22 transmits the measured processing time of the neural network (processing time information) to the server device 10 by the communication section 24.

The storage section 23 stores programs and information for the processing section 22 to execute various kinds of processing, and information obtained by the processing. For example, the storage section 23 can be used to temporarily store information output from the sensor section 21, such as the sensing data. Note that the storage section 23 is realized by, for example, a storage device such as a solid state drive (SSD) or a hard disk drive (HDD).

The communication section 24 can transmit and receive data to and from an external device such as the server device 10. The communication section 24 is, for example, a communication interface having a function of transmitting and receiving data.

Note that each of functional sections such as the processing section 22 may be configured by both or one of hardware and software as described above. These configurations are not specifically limited. For example, each of the above-described functional sections may be realized when a computer such as the CPU or MPU executes a program, which is stored in advance in the ROM, by using the RAM or the like as a work area. Also, each of the functional sections may be realized by, for example, an integrated circuit such as an ASIC or an FPGA.

### <1-4. Example of a communication standard between devices>

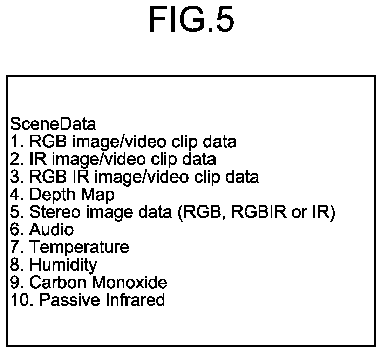

An example of a communication standard between devices according to the first embodiment, that is, a NICE standard (network of intelligent camera ecosystem) will be described with reference to FIG. 4. FIG. 4 is a diagram for describing "SetSceneMode" of the NICE standard according to the first embodiment. FIG. 5 is a diagram for describing "SetSceneData" of the NICE standard according to the first embodiment.

Communication with the server device 10 and each of the edge devices 20 is performed on the basis of any of various communication standards, and is performed, for example, on the basis of the NICE standard (see, for example, NICE Data Pipeline Specification v1.0.1). The NICE standard is compatible with the once-for-all technology. Examples of a communication command in the NICE specification include "GetCapabilities", "SetSceneMode", "SetSceneMark", and "SetSceneData".

"GetCapabilities" is an application programming interface (API) for inquiring a capability of a device. Here, the capability is information such as whether a moving image or a still image can be taken, whether a format is JPEG or H.264, and which SceneMode is supported.

"SetSceneMode" is an API that sets SceneMode. Examples of SceneMode include scene modes such as person detection and moving body detection. Specifically, as depicted in FIG. 4, there are "1. Face, 2. Human, 3. Object Label, 4. Animal, 5. Text/Logo/QRCode, 6. Vehicle, and 7. Custom" as SceneMode.

For example, a scene mode in which a face of a person is detected (detection of a face of a person is a trigger) can be set by designation of "1. Face", and a scene mode in which an animal is detected (detection of an animal is a trigger) can be set by designation of "4. Animal".

"SetSceneMark" is an API that sends, in a case where the trigger set in SetSceneMode is turned ON, information at that time. For example, in a case where SetSceneMode is set to person detection, meta information such as a thumbnail and a time stamp of when a person appears is sent. That is, information indicating that what is designated in SceneMode appears (such as a node, thumbnail, image, time stamp, or the like) is transmitted as Scene Mark.

"SetSceneData" is similar to SetSceneMark. While SceneMark is the meta information, SceneData is data itself. Specifically, as SceneData, there are "1. RGB image/video clip data, 2. IR image/video clip data, 3. RGB IR image/video clip data, 4. Depth Map, 5. Stereo image data (RGB, RGBIR or IR), 6. Audio, 7. Temperature, 8. Humidity, 9. Carbon Monoxide, and 10. Passive Infrared" as depicted in FIG. 5.

Specifically, as the NICE standard, NICE Data Pipeline Specification v1.0.1 (10.8.2. JSON Object) described above prescribes a format of transmission data of when the sensor device transmits sensing data ("SceneData") of when a predetermined condition is satisfied. Specifically, in this format, it is prescribed that "SceneData" that is as an actual data portion in the sensing data and data that is an additional data portion of "SceneData", that includes information of "SceneDataType" indicating a type (kind) of "SceneData", and that is called "SceneMark" are transmitted.

### <1-5. Example of a processing flow>

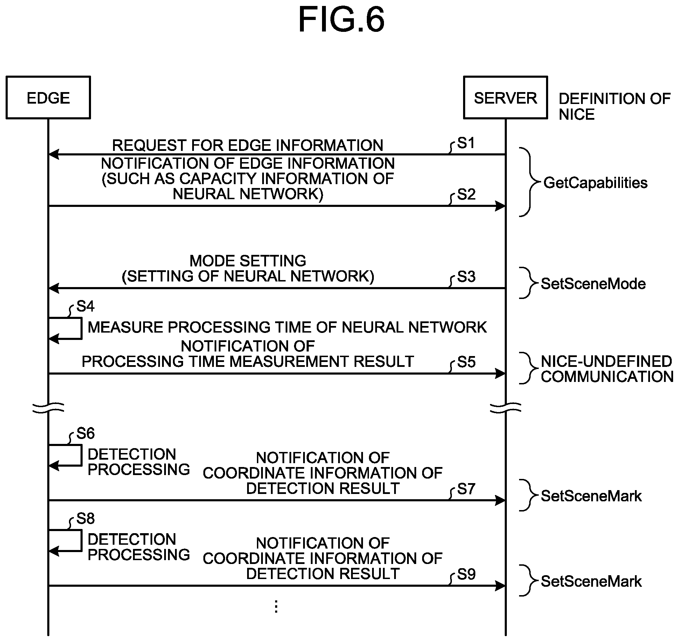

An example of a processing flow according to the first embodiment will be described with reference to FIG. 6. FIG. 6 is a flowchart depicting the example of the processing flow according to the first embodiment.

As depicted in FIG. 6, the server device 10 sends an edge information request to the edge device 20 by GetCapabilities (Step S1). In response to the edge information request, the edge device 20 notifies the server device 10 of edge information by GetCapabilities (Step S2).

The edge information is information related to processing capability of the edge device 20 (processing capability of an edge itself). The edge information includes all or at least one of "capacity information of a neural network", "filter size information of favorite CNN (filter size information of a convolutional neural network)", "HW architecture type information (hardware architecture type information)", "chip information", and "device model number information".

The "capacity information of a neural network" is, for example, information indicating a capacity that can be used for AI processing, such as a memory size that can be used for a parameter or a memory size that can be used for a feature map. By looking at this capacity, it is possible to understand which scale of the neural network can be processed by the edge device 20.

The "favorite CNN filter size information" is, for example, information indicating a CNN filter size with good calculation efficiency. The server device 10 can use the filter size as a reference of how the edge device 20 selects the CNN filter size. For example, in a case where the edge device 20 includes a single instruction/multiple data (SIMD) operator, there is a CNN filter size with good operation efficiency depending on parallelism.

The "HW architecture type information" is, for example, information indicating a degree of whether HW has a strong memory transfer rate control in an HW architecture or HW has almost no memory transfer rate control. It can be understood that the processing is faster when a shallow network is sent because the one with the strong memory transfer rate control is not good at processing a deep neural network.

The "chip information" is, for example, information indicating a model number or the like of an edge chip that is a processing chip. The server device 10 can grasp a processing capability of the edge chip from the edge chip information. The chip information also includes artificial intelligence chip information (AI chip information). The AI chip information is, for example, information indicating a model number or the like of an edge AI chip that is a processing chip having an edge AI function. The server device 10 can grasp a processing capability of the edge AI chip from the edge AI chip information.

The "device model number information" is, for example, information indicating a model number of the edge device 20 (model number of edge equipment) or the like. The server device 10 can grasp a processing capability of the edge device 20 from the model number information of the edge device 20.

At least one or more of these five pieces of information are returned to the server device 10, and the server device 10 uses the information as reference information of when a neural network is generated by the once-for-all technology. As a result, the server device 10 can appropriately select and generate a neural network capable of deriving the capability of the edge device 20.

The server device 10 generates a neural network suitable for the processing capability of the edge device 20 by the once-for-all technology on the basis of the edge information, and sends the generated neural network (setting of the neural network) to the edge device 20 in SetSceneMode (Step S3).

The edge device 20 once processes the neural network based on the mode setting (setting of the neural network) transmitted from the server device 10, and measures the processing time (processing speed) of the neural network (Step S4). The edge device 20 notifies the server device 10 of the measured processing time measurement result (Step S5).

Note that a processing time measuring program that measures the processing time may be incorporated in the edge device 20 in advance, or may be sent in a form of an add-on program together with the neural network information in SetSceneMode. In addition, the processing time measuring program may be sent as an add-on program by another command.

The server device 10 sees the processing time information notified from the edge device 20, and enters a standby state of coordinate information of a detection result (SetSceneMark) in a case where the processing time reaches a target value.

The edge device 20 repeats detection processing based on a scene mode until a detection target is detected (Step S6), and notifies, when detecting the detection target, the server device 10 of coordinate information of the detection result (such as coordinate information on the screen) by SetSceneMark, for example (Step S7). Subsequently, the edge device 20 repeats the detection processing based on the scene mode again until detecting the detection target (Step S8), and notifies, when detecting the detection target, the server device 10 of the coordinate information of the detection result by SetSceneMark, for example (Step S9).

According to such processing, the edge device 20 passes, as the edge information, all or at least one of the "capacity information of a neural network", the "filter size information of favorite CNN", the "HW architecture type information", the "chip information", and the "device model number information" to the server device 10, further measures the processing time of the neural network supplied from the server device 10, and passes the processing time to the server device 10. As a result, the server device 10 can send a neural network that can maximize processing performance of the edge device 20, and can set the processing time (processing speed) to a satisfactory value. In addition, since the server device 10 can also generate and resend the neural network until the processing time reaches a satisfactory value (target value), it is possible to more reliably set the satisfactory value for the processing time.

### <1-6. Example of a processing flow of the server device>

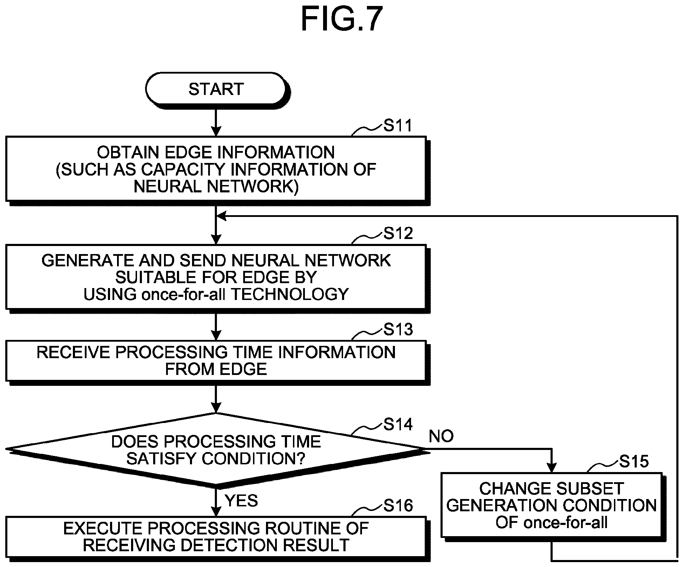

An example of a processing flow of the server device 10 according to the first embodiment will be described with reference to FIG. 7. FIG. 7 is a flowchart depicting the example of the processing flow of the server device 10 according to the first embodiment.

As depicted in FIG. 7, the server device 10 obtains the edge information from the edge device 20 (Step S11). At this time, the server device 10 obtains the edge information from the edge device 20 by transmitting and receiving a GetCapability command (GetCapabilities) .

On the basis of the obtained edge information, the server device 10 generates a neural network (setting of the neural network) suitable for the processing capability of the edge device 20 by using the once-for-all technology, and sends the neural network to the edge device 20 (Step S12). At this time, the server device 10 sends the neural network to the edge device 20 by a SetSceneMode command.

Subsequently, the server device 10 receives the processing time information from the edge device 20 (Step S13), and determines whether the processing time included in the processing time information satisfies a condition (Step S14). For example, the server device 10 determines whether the processing time reaches a target value (predetermined value or smaller), determines that the processing time satisfies the condition when the processing time reaches the target value, and determines that the processing time does not satisfy the condition when the processing time does not reach the target value.

In a case of determining that the processing time satisfies the condition (YES in Step S14), the server device 10 executes a processing routine of receiving a detection result (Step S16). On the other hand, in a case where it is determined that the processing time does not satisfy the condition (NO in Step S14), a generation condition of a once-for-all subset neural network (subset generation condition) is changed (Step S15), and the processing returns to Step S12. In Step S12, a neural network having a scale suitable for the processing capability of the edge device 20 is generated on the basis of the subset generation condition, and the neural network is sent to the edge device 20 again.

### <1-7. Example of a processing flow of the edge device>

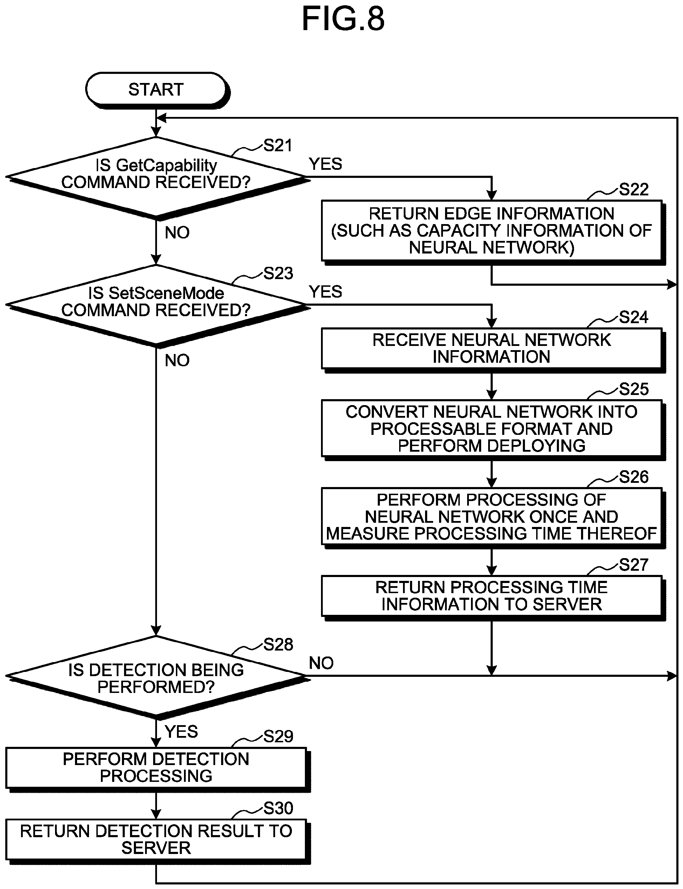

An example of a processing flow of the edge device 20 according to the first embodiment will be described with reference to FIG. 8. FIG. 8 is a flowchart depicting the example of the processing flow of the edge device 20 according to the first embodiment.

As depicted in FIG. 8, the edge device 20 determines whether a GetCapability command is received (Step S21). In a case where it is determined that the GetCapability command is received (YES in Step S21), the edge information is returned to the server device 10 (Step S22), and the processing returns to Step S21. On the other hand, in a case where it is determined that the GetCapability command is not received (NO in Step S21), it is determined whether the SetSceneMode command is received (Step S23).

In a case where it is determined that the SetSceneMode command is received (YES in Step S23), the edge device 20 receives the neural network information included in the SetSceneMode command (Step S24), converts the neural network into a format that can be processed, and deploys the neural network (Step S25). Then, the edge device 20 performs the processing of the neural network once, measures the processing time thereof (Step S26), returns the processing time information to the server device 10 (Step S27), and returns the processing to Step S21.

On the other hand, in a case where it is determined that the SetSceneMode command is not received (NO in Step S23), it is determined whether an operation mode is being detected (Step S28). In a case where it is determined that the operation mode is not being detected, the processing returns to Step S21. On the other hand, in a case where it is determined that the operation mode is being detected, the detection processing is performed (Step S29), a detection result is returned to the server device 10 in response to the detection (Step S30), and the processing returns to Step S21.

Note that as it is described to "convert the neural network into a format that can be processed and deploy the neural network" in Step S25 described above, the neural network may be sent in a format that requires the conversion by the edge device 20. However, the neural network may be sent in a format that does not require the conversion by the edge device 20. In the latter case, the deployment can be performed without the conversion.

### <1-8. Action/effect>

As described above, according to the first embodiment, the communication section 24 of the edge device 20 transmits, to the server device 10 that generates the neural network, information related to the processing capability for processing the neural network supplied from the server device 10. As a result, the server device 10 can generate the neural network suitable for the processing capability of the edge device 20 on the basis of the processing capability of the edge device 20. Thus, since the server device 10 can send the neural network of an appropriate scale to the edge device 20, the device performance of the edge device 20 can be sufficiently derived.

Furthermore, the information related to the processing capability may include at least one of the capacity information of the neural network, the filter size information of the favorite convolutional neural network, the hardware architecture type information, the chip information, and the device model number information. As a result, the server device 10 can quickly generate the neural network having the appropriate scale with respect to the edge device 20 from at least one piece of the information described above, whereby the processing time of generating the neural network can be controlled.

Furthermore, the information related to the processing capability may include all of the capacity information of the neural network, the filter size information of the favorite convolutional neural network, the hardware architecture type information, the chip information, and the device model number information. As a result, the server device 10 can securely generate the neural network of the appropriate scale with respect to the edge device 20 from all pieces of the information described above. Thus, it is possible to sufficiently and reliably derive the device performance of the edge device 20.

Furthermore, the communication section 24 of the edge device 20 may transmit the information related to the processing capability by GetCapability in the NICE standard. As a result, transmission and reception between the devices can be appropriately performed.

Furthermore, in the edge device 20, the communication section 24 may receive the neural network generated by the server device 10 on the basis of the information related to the processing capability of the edge device 20, the processing section 22 may process the neural network and measure the processing time of the neural network, and the communication section 24 may transmit the measured processing time to the server device 10. As a result, since the server device 10 can grasp the processing time of the neural network by the edge device 20, the neural network suitable for the processing capability of the edge device 20 can be securely generated. As a result, the device performance of the edge device 20 can be sufficiently and reliably derived.

Furthermore, the communication section 24 of the edge device 20 may receive the neural network generated again by the server device 10. As a result, since the edge device 20 processes the more appropriate neural network, the device performance of the edge device 20 can be sufficiently and reliably derived.

Furthermore, in the server device 10, the communication section 17 receives the information related to the processing capability of the edge device 20 for processing the neural network, the control section 11 generates the neural network suitable for the edge device 20 on the basis of the received information related to the processing capability, and the communication section 17 transmits the generated neural network to the edge device 20. As a result, the server device 10 can generate the neural network suitable for the processing capability of the edge device 20 on the basis of the processing capability of the edge device 20. Thus, since the server device 10 can send the neural network of an appropriate scale to the edge device 20, the device performance of the edge device 20 can be sufficiently derived.

Furthermore, the communication section 17 of the server device 10 may receive the information related to the processing capability of the edge device 20 which information is transmitted by GetCapability in the NICE standard. As a result, transmission and reception between the devices can be appropriately performed.

Furthermore, the communication section 17 of the server device 10 may receive the processing time of the neural network which processing time is measured by the edge device 20. As a result, since the server device 10 can grasp the processing time of the neural network by the edge device 20, it is possible to reliably generate the neural network suitable for the processing capability of the edge device 20.

Furthermore, in the server device 10, in a case where the processing time of the neural network by the edge device 20 is longer than the target value, the control section 11 may change the generation condition of the neural network and generate the neural network suitable for the edge device 20 again, and the communication section 17 may transmit the neural network generated again to the edge device 20. As a result, since the edge device 20 processes the more appropriate neural network, the device performance of the edge device 20 can be sufficiently and reliably derived.

Furthermore, in the server device 10, the control section 11 may repeat changing the generation condition of the neural network and generating the neural network suitable for the edge device 20 until the processing time becomes equal to or shorter than the target value, and the communication section 17 may transmit the neural network generated again to the edge device 20 at each time of the generation. As a result, since the edge device 20 processes the more appropriate neural network, the device performance of the edge device 20 can be sufficiently and reliably derived.

### <2. Second embodiment>

### <2-1. Example of a processing flow>

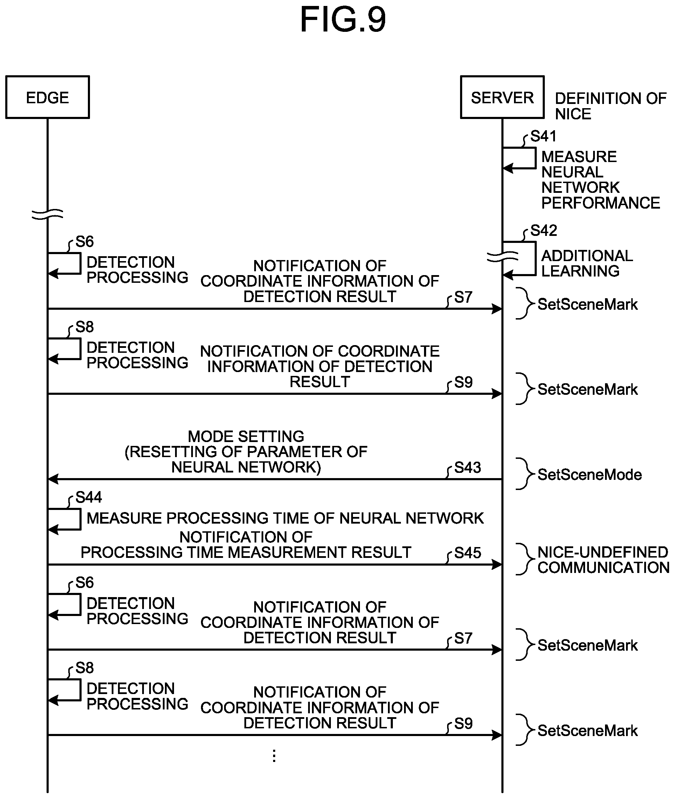

An example of a processing flow according to the second embodiment will be described with reference to FIG. 9. FIG. 9 is a flowchart depicting the example of the processing flow according to the second embodiment. Note that in the example of FIG. 9, detection processing and coordinate information notification of a detection result are similar to those of the first embodiment (see FIG. 6), and a description thereof will be omitted.

As depicted in FIG. 9, a server device 10 independently measures performance of a neural network sent by the server itself (Step S41). In a case where the measured performance is bad, additional learning is performed (Step S42). Subsequently, the server device 10 sends a parameter of an additional learning result to an edge device 20 and performs an update at a predetermined timing (for example, one day later) (Step S43). Note that a detection rate is measured and it is determined whether the performance of the neural network is good or bad on the basis of the detection rate. That is, in a case where the detection rate does not reach a target value, it is determined that the performance is bad.

The edge device 20 once processes the neural network based on mode setting (resetting of a parameter of the neural network) transmitted from the server device 10, and measures a processing time (processing speed) of the neural network (Step S44). The edge device 20 notifies the server device 10 of the measured processing time (Step S45) .

Here, in a once-for-all technology, a learned subset neural network can be generated. However, performance is higher when the additional learning is performed. Thus, the server device 10 independently measures the performance of the neural network sent by the edge device 20, performs the additional learning in a case where the performance is not satisfactory, sends a parameter of the result to the edge device 20 later, and performs an update. As a result, detection performance of the edge device 20 can be improved.

Furthermore, in learning such as the additional learning, the server device 10 may perform the learning on the basis of detection information such as a detection result obtained by the edge device 20 (such as image information, sound information, and the like). For example, the edge device 20 notifies the server device 10 of image information as the detection information in addition to coordinate information of the detection result. In this case, the server device 10 may perform the additional learning on the basis of the image information notified from the edge device 20.

Note that although it has been described in the second embodiment that the parameter update is performed in SetSceneMode, the update may be performed by communication in which the NICE standard is undefined, or the update may be performed by defining of dedicated communication.

### <2-2. Modification example of a processing flow>

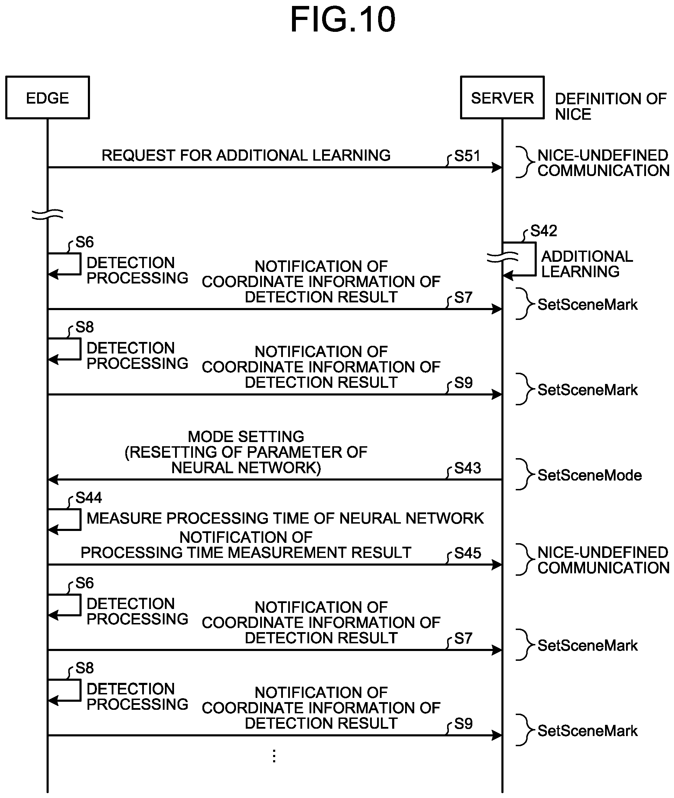

A modification example of a processing flow according to the second embodiment will be described with reference to FIG. 10. FIG. 10 is a flowchart depicting the modification example of the processing flow according to the second embodiment. Note that differences from FIG. 9 will be described in the example of FIG. 10.

As depicted in FIG. 10, for example, in a case of realizing that performance of a neural network is bad, the edge device 20 transmits an additional learning request to a server device 10 by communication from a side of the edge device 20 (Step S51). In response to this, the server device 10 performs additional learning. The other processing is similar to that of FIG. 9. Note that a detection rate is measured and it is determined whether the performance of the neural network is good or bad on the basis of the detection rate. That is, in a case where the detection rate does not reach a target value, it is determined that the performance is bad.

In such a manner, a trigger of the additional learning can be generated from the side of the edge device 20. Application is possible with respect to a case where the edge device 20 is performing detection processing and the edge device 20 can determine that the detection rate is extremely bad. In this case, the edge device 20 can measure the detection rate, and can determine whether the neural network is good or bad.

Note that although the additional learning request is sent from the edge device 20 to the server device 10 in the example of FIG. 10, a state of the edge device 20 may be seen by polling from a side of the server device 10 and it may be understood that there is the additional learning request.

In addition, when the server device 10 finds that sufficient accuracy is not obtained even when the additional learning is performed, the processing may be returned to the beginning and performed again from neural network selection. Alternatively, in a case of desiring neural network re-selection to be performed, the edge device 20 may perform communication indicating that effect, and the server device 10 may perform the processing again from the neural network re-selection.

### <2-3. Action/effect>

As described above, according to the second embodiment (including the modification example), it is possible to obtain effects similarly to the first embodiment. That is, even with the configuration as in the second embodiment, the device performance of the edge device 20 can be sufficiently derived. In addition, the detection performance of the edge device 20 can be improved. Alternatively, in the modification example, the trigger of the additional learning can be generated from the side of the edge device 20.

Furthermore, a control section 11 of the server device 10 may additionally learn the neural network suitable for the edge device 20, and a communication section 24 of the edge device 20 may receive the neural network generated by the additional learning by the server device 10. As a result, since the edge device 20 processes the more appropriate neural network, the device performance of the edge device 20 can be sufficiently and reliably derived.

### <3. Third embodiment>

### <3-1. Example of a processing flow>

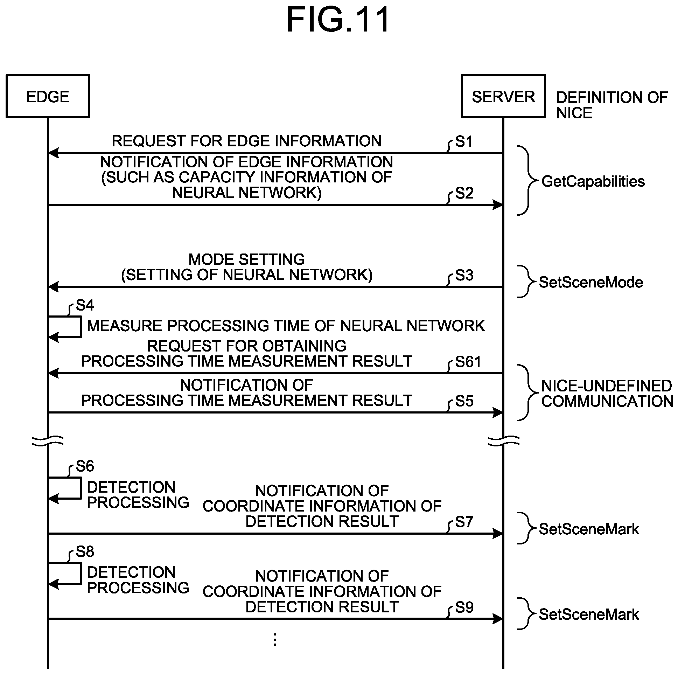

An example of a processing flow according to the third embodiment will be described with reference to FIG. 11. FIG. 11 is a flowchart depicting the example of the processing flow according to the third embodiment. In the example of FIG. 11, differences from FIG. 6 will be described.

As depicted in FIG. 11, a server device 10 sends an obtaining request of a processing time measurement result to an edge device 20 (Step S61). In response to this, the edge device 20 notifies the server device 10 of the measured processing time measurement result (processing time information) (Step S5).

That is, in the first embodiment, the notification of the processing time measurement result is transmitted from the edge device 20 toward the server device 10. However, in the second embodiment, a request may be issued from the server device 10 and the processing time measurement result may be obtained.

### <3-2. Action/effect>

As described above, according to the third embodiment, it is possible to obtain effects similarly to the first embodiment. That is, even with the configuration as in the third embodiment, the device performance of the edge device 20 can be sufficiently derived. In addition, the request can be issued from the server device 10 and the processing time measurement result can be obtained.

### <4. Fourth embodiment>

### <4-1. Example of a processing flow>

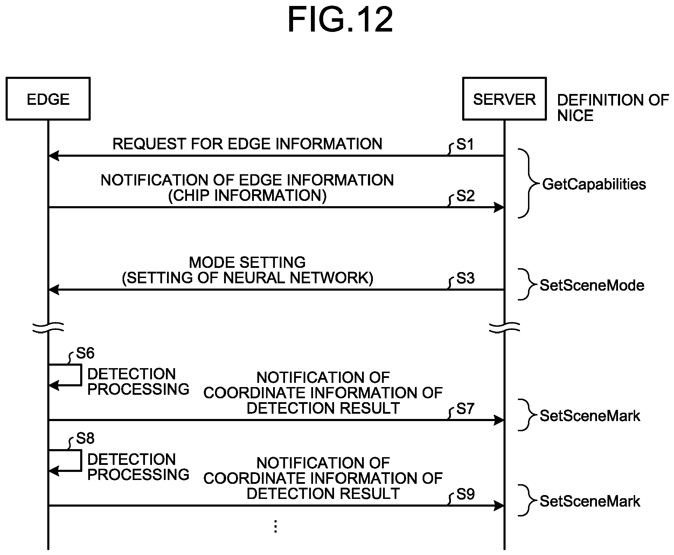

An example of a processing flow according to the fourth embodiment will be described with reference to FIG. 12. FIG. 12 is a flowchart depicting the example of the processing flow according to the fourth embodiment. In the example of FIG. 12, differences from FIG. 6 will be described.

As depicted in FIG. 12, an edge device 20 returns edge information (chip information) from the edge device 20 to a server device 10 by GetCapability in response to an edge information request (Step S2). The server device 10 finds a subset neural network with a satisfactory processing time on the basis of the chip information by using a processing section such as a converter or a builder, and sends a mode setting thereof (setting of the neural network) to the edge device 20 (Step S3).

Here, the processing section such as the converter or the builder is realized by the control section 11. Since the processing section grasps a movement of the edge device 20 in detail, it is possible to analytically calculate a time for processing the neural network. Note that a processing section 22 of the edge device 20 may not function as a measuring section in the fourth embodiment.

On the basis of the chip information, the server device 10 obtains processing time (processing speed) on a side of the server device 10 by using the processing section such as the converter or the builder of the neural network for the chip. For example, at a time point at which the desired neural network is passed through the converter or the builder, it can be determined whether the capacity of the neural network is reached.

In such a manner, the server device 10 can make the subset neural network created by a once-for-all technology pass through the processing section such as the converter or the builder, and can grasp whether the capacity is reached and how fast the processing speed is. In the server device 10, the subset neural network with the satisfactory processing time is found and is sent to the edge device 20. Whether the processing time is satisfactory is determined on the basis of the processing time. That is, in a case where the processing time reaches a target value or smaller, it is determined that the processing time is satisfactory.

Note that the edge device 20 may return AI chip information (such as an AI chip model number or the like) as the chip information (such as a chip model number or the like). In this case, the control section 11 including the converter, the builder, or the like generates the subset neural network with the satisfactory processing time on the basis of the AI chip information. Furthermore, the edge device 20 may return device model number information (such as a model number or the like of the edge device 20) instead of the chip information. This is because all the chip information and the like can be understood when the device model number information is known.

Furthermore, in a case where the server device 10 does not include the processing section such as the converter or the builder, the server device 10 may obtain a processing function (such as a program or the like) similar to that of the converter or the builder from the outside via a communication network 30, and generate the subset neural network with the satisfactory processing time. Furthermore, the server device 10 may directly find the subset neural network with the satisfactory processing time from the outside.

### <4-2. Action/effect>

As described above, according to the fourth embodiment, it is possible to obtain effects similarly to the first embodiment. That is, even with the configuration as in the fourth embodiment, the device performance of the edge device 20 can be sufficiently derived. In addition, the satisfactory subset neural network can be generated on the side of the server device 10.

Furthermore, the control section 11 of the server device 10 may calculate the processing time of the neural network by the edge device 20. As a result, the server device 10 can predict the processing time of the neural network by the edge device 20 and provide the more appropriate neural network to the edge device 20, whereby the device performance of the edge device 20 can be sufficiently and reliably derived.

### <5. Fifth embodiment>

### <5-1. Example of a processing flow>

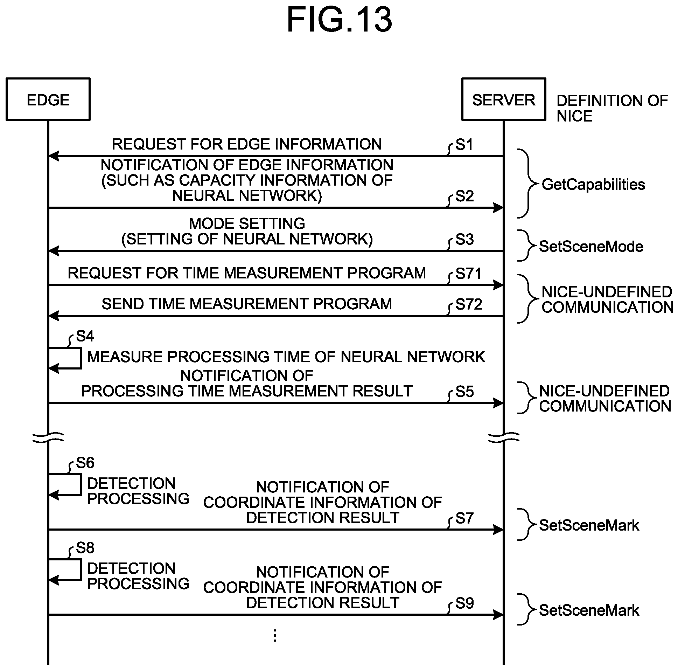

An example of a processing flow according to the fifth embodiment will be described with reference to FIG. 13. FIG. 13 is a flowchart depicting the example of the processing flow according to the fifth embodiment. In the example of FIG. 13, differences from FIG. 6 will be described.

As depicted in FIG. 13, an edge device 20 requests a time measurement program to a server device 10 (Step S71). In response to the request for the time measurement program, the server device 10 sends the time measurement program to the edge device 20 (Step S72).

The edge device 20 once processes a neural network based on mode setting (setting of the neural network) transmitted from the server device 10, and measures a processing time (processing speed) of the neural network on the basis of a clock measurement program (Step S4) .

### <5-2. Action/effect>

As described above, according to the fifth embodiment, it is possible to obtain effects similarly to the first embodiment. That is, even with the configuration as in the fifth embodiment, the device performance of the edge device 20 can be sufficiently derived. Furthermore, even in a case where the edge device 20 does not have the time measurement program, the edge device 20 can obtain the time measurement program from the server device 10 and measure the processing time of the neural network.

### <6. Other embodiments>

The processing according to the above-described embodiments (or modification examples) may be performed in various different forms (modification examples) other than the above-described embodiments. For example, among the pieces of processing described in the above embodiments, a whole or part of the processing described to be automatically performed can be manually performed, or a whole or part of the processing described to be manually performed can be automatically performed by a known method. In addition, the processing procedures, specific names, and information including various kinds of data or parameters described in the above document or in the drawings can be arbitrarily changed unless otherwise specified. For example, various kinds of information depicted in each drawing are not limited to the depicted information.

Also, each component of each of the depicted devices is a functional concept, and does not need to be physically configured in the depicted manner. That is, a specific form of distribution/integration of each device is not limited to what is depicted in the drawings, and a whole or part thereof can be functionally or physically distributed/integrated in an arbitrary unit according to various loads and usage conditions.

Also, the above-described embodiments (or modification examples) can be arbitrarily combined in a range in which the processing contents do not contradict with each other. Also, the effect described in the present description is merely an example and is not a limitation, and there may be another effect.

Note that the notification of the processing time measurement result is performed only once, for example. However, the notification may be performed periodically (for example, every other day, or the like), or the notification may be performed when a change is generated in the processing time.

### <7. Application example>

A technology according to the present disclosure can be applied to various products. For example, the technology according to the present disclosure may be realized as a device mounted on any type of mobile bodies such as an automobile, an electric vehicle, a hybrid electric vehicle, a motorcycle, a bicycle, a personal mobility, an airplane, a drone, a ship, a robot, a construction machine, and an agricultural machine (tractor).

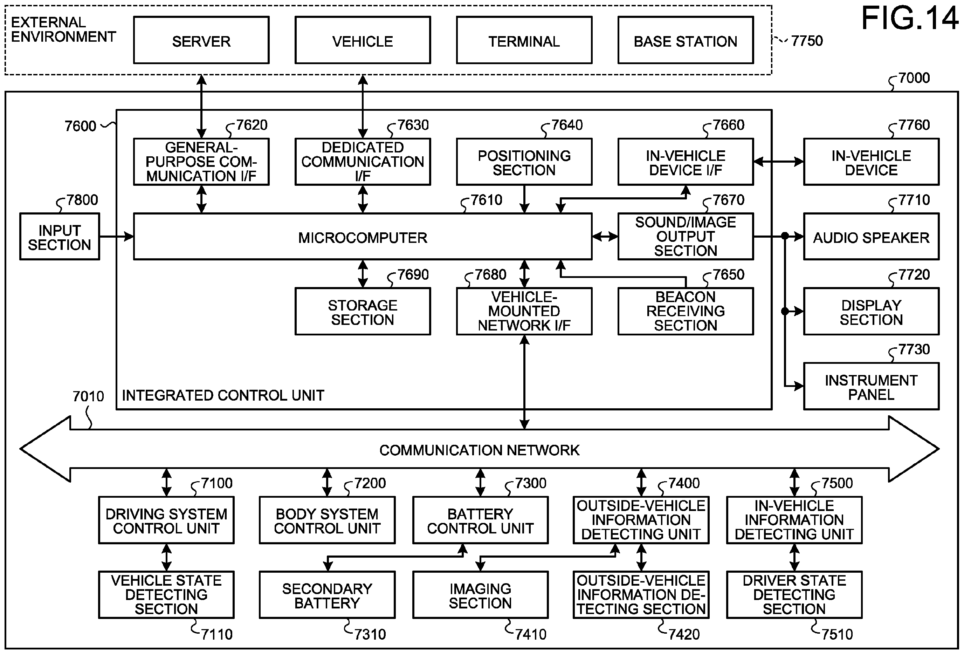

FIG. 14 is a block diagram depicting an example of schematic configuration of a vehicle control system 7000 as an example of a mobile body control system to which the technology according to an embodiment of the present disclosure can be applied. The vehicle control system 7000 includes a plurality of electronic control units connected to each other via a communication network 7010. In the example depicted in FIG. 14, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay (registered trademark), or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or radio communication. A functional configuration of the integrated control unit 7600 illustrated in FIG. 14 includes a microcomputer 7610, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs. For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 and an outside-vehicle information detecting section 7420. The imaging section 7410 includes at least one of a time-of-flight (ToF) camera, a stereo camera, a monocular camera, an infrared camera, and other cameras. The outside-vehicle information detecting section 7420, for example, includes at least one of an environmental sensor for detecting current atmospheric conditions or weather conditions and a peripheral information detecting sensor for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, and a snow sensor detecting a snowfall. The peripheral information detecting sensor may be at least one of an ultrasonic sensor, a radar device, and a LIDAR device (Light detection and Ranging device, or Laser imaging detection and ranging device). Each of the imaging section 7410 and the outside-vehicle information detecting section 7420 may be provided as an independent sensor or device, or may be provided as a device in which a plurality of sensors or devices are integrated.

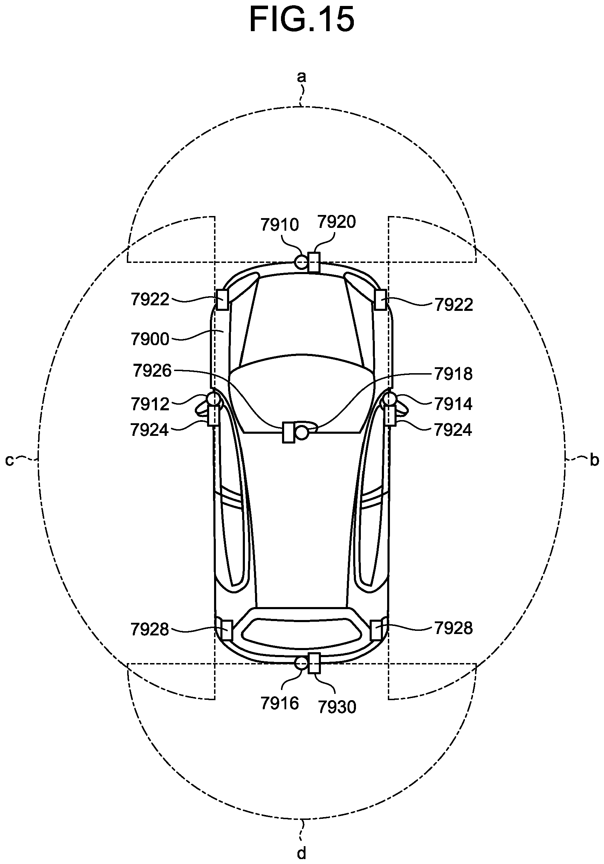

FIG. 15 depicts an example of installation positions of the imaging section 7410 and the outside-vehicle information detecting section 7420. Imaging sections 7910, 7912, 7914, 7916, and 7918 are, for example, disposed at at least one of positions on a front nose, sideview mirrors, a rear bumper, and a back door of the vehicle 7900 and a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided to the sideview mirrors obtain mainly an image of the sides of the vehicle 7900. The imaging section 7916 provided to the rear bumper or the back door obtains mainly an image of the rear of the vehicle 7900. The imaging section 7918 provided to the upper portion of the windshield within the interior of the vehicle is used mainly to detect a preceding vehicle, a pedestrian, an obstacle, a signal, a traffic sign, a lane, or the like.

Incidentally, FIG. 15 depicts an example of photographing ranges of the respective imaging sections 7910, 7912, 7914, and 7916. An imaging range a represents the imaging range of the imaging section 7910 provided to the front nose. Imaging ranges b and c respectively represent the imaging ranges of the imaging sections 7912 and 7914 provided to the sideview mirrors. An imaging range d represents the imaging range of the imaging section 7916 provided to the rear bumper or the back door. A bird's-eye image of the vehicle 7900 as viewed from above can be obtained by superimposing image data imaged by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900 and the upper portion of the windshield within the interior of the vehicle may be, for example, an ultrasonic sensor or a radar device. The outside-vehicle information detecting sections 7920, 7926, and 7930 provided to the front nose of the vehicle 7900, the rear bumper, the back door of the vehicle 7900, and the upper portion of the windshield within the interior of the vehicle may be a LIDAR device, for example. These outside-vehicle information detecting sections 7920 to 7930 are used mainly to detect a preceding vehicle, a pedestrian, an obstacle, or the like.

Returning to FIG. 14, the description will be continued. The outside-vehicle information detecting unit 7400 makes the imaging section 7410 image an image of the outside of the vehicle, and receives imaged image data. In addition, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

In addition, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that images the driver, a biosensor that detects biological information of the driver, a microphone that collects sound within the interior of the vehicle, or the like. The biosensor is, for example, disposed in a seat surface, the steering wheel, or the like, and detects biological information of an occupant sitting in a seat or the driver holding the steering wheel. On the basis of detection information input from the driver state detecting section 7510, the in-vehicle information detecting unit 7500 may calculate a degree of fatigue of the driver or a degree of concentration of the driver, or may determine whether the driver is dozing. The in-vehicle information detecting unit 7500 may subject an audio signal obtained by the collection of the sound to processing such as noise canceling processing or the like.

The integrated control unit 7600 controls general operation within the vehicle control system 7000 in accordance with various kinds of programs. The integrated control unit 7600 is connected with an input section 7800. The input section 7800 is implemented by a device capable of input operation by an occupant, such, for example, as a touch panel, a button, a microphone, a switch, a lever, or the like. The integrated control unit 7600 may be supplied with data obtained by voice recognition of voice input through the microphone. The input section 7800 may, for example, be a remote control device using infrared rays or other radio waves, or an external connecting device such as a mobile telephone, a personal digital assistant (PDA), or the like that supports operation of the vehicle control system 7000. The input section 7800 may be, for example, a camera. In that case, an occupant can input information by gesture. Alternatively, data may be input which is obtained by detecting the movement of a wearable device that an occupant wears. Further, the input section 7800 may, for example, include an input control circuit or the like that generates an input signal on the basis of information input by an occupant or the like using the above-described input section 7800, and which outputs the generated input signal to the integrated control unit 7600. An occupant or the like inputs various kinds of data or gives an instruction for processing operation to the vehicle control system 7000 by operating the input section 7800.

The storage section 7690 may include a read only memory (ROM) that stores various kinds of programs executed by the microcomputer and a random access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magneto-optical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system for mobile communications (GSM (registered trademark)), worldwide interoperability for microwave access (WiMAX (registered trademark)), long term evolution (LTE (registered trademark)), LTE-advanced (LTE-A), or the like, or another wireless communication protocol such as wireless LAN (referred to also as wireless fidelity (Wi-Fi (registered trademark)), Bluetooth (registered trademark), or the like. The general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such, for example, as wireless access in vehicle environment (WAVE), which is a combination of institute of electrical and electronic engineers (IEEE) 802.11p as a lower layer and IEEE 1609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a personal handyphone system (PHS), or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present within the vehicle. The in-vehicle device I/F 7660 may establish wireless connection using a wireless communication protocol such as wireless LAN, Bluetooth (registered trademark), near field communication (NFC), or wireless universal serial bus (WUSB). In addition, the in-vehicle device I/F 7660 may establish wired connection by universal serial bus (USB), high-definition multimedia interface (HDMI (registered trademark)), mobile high-definition link (MHL), or the like via a connection terminal (and a cable if necessary) not depicted in the figures. The in-vehicle devices 7760 may, for example, include at least one of a mobile device and a wearable device possessed by an occupant and an information device carried into or attached to the vehicle. The in-vehicle devices 7760 may also include a navigation device that searches for a path to an arbitrary destination. The in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automated driving, which makes the vehicle to travel automatedly without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. In addition, the microcomputer 7610 may predict danger such as collision of the vehicle, approaching of a pedestrian or the like, an entry to a closed road, or the like on the basis of the obtained information, and generate a warning signal. The warning signal may, for example, be a signal for producing a warning sound or lighting a warning lamp.

The sound/image output section 7670 transmits an output signal of at least one of a sound and an image to an output device capable of visually or auditorily notifying information to an occupant of the vehicle or the outside of the vehicle. In the example of FIG. 14, an audio speaker 7710, a display section 7720, and an instrument panel 7730 are illustrated as the output device. The display section 7720 may, for example, include at least one of an on-board display and a head-up display. The display section 7720 may have an augmented reality (AR) display function. The output device may be other than these devices, and may be another device such as headphones, a wearable device such as an eyeglass type display worn by an occupant or the like, a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Incidentally, at least two control units connected to each other via the communication network 7010 in the example depicted in FIG. 14 may be integrated into one control unit. Alternatively, each individual control unit may include a plurality of control units. Further, the vehicle control system 7000 may include another control unit not depicted in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

Note that a computer program for realizing each function of the edge device 20 described in each of the embodiments (including the modification examples) can be mounted on any control unit or the like. Furthermore, it is also possible to provide a computer-readable recording medium that stores such a computer program. The recording medium is, for example, a magnetic disk, an optical disk, a magneto-optical disk, a flash memory, or the like. Furthermore, the computer program described above may be distributed via, for example, a network without utilization of the recording medium.

In the vehicle control system 7000 described above, the edge device 20 described in each of the embodiments (including the modification examples) can be applied to the integrated control unit 7600 of the application example depicted in FIG. 14. For example, the processing section 22, the storage section 23, and the like of the edge device 20 may be realized by the microcomputer 7610 or the storage section 7690 of the integrated control unit 7600. Furthermore, the edge device 20 described in each of the embodiments can be applied to the imaging section 7410 and the outside-vehicle information detecting section 7420 of the application example depicted in FIG. 14, such as the imaging sections 7910, 7912, 7914, 7916, and 7918, the outside-vehicle information detecting sections 7920 to 7930, and the like of the application example depicted in FIG. 15. By using the edge device 20 described in each of the embodiments, it is possible to sufficiently derive the device performance also in the vehicle control system 7000.

In addition, at least some components of the edge device 20 described in each of the embodiments (including the modification examples) may be realized in a module for the integrated control unit 7600 of the application example depicted in FIG. 14 (such as an integrated circuit module including one die). Alternatively, a part of the edge device 20 described in each of the embodiments may be realized by a plurality of control units of the vehicle control system 7000 depicted in FIG. 14.

### <8. Appendix>

Note that the present technology can also have the following configurations.
(1) An information processing device comprising: a transmitting section that transmits, to a server device that generates a neural network, information related to a processing capability for processing the neural network supplied from the server device.
(2) The information processing device according to (1), wherein
   the information related to the processing capability includes at least one of capacity information of the neural network, filter size information of a favorite convolutional neural network, hardware architecture type information, chip information, and device model number information.
(3) The information processing device according to (1), wherein
   the information related to the processing capability includes all of capacity information of the neural network, filter size information of a favorite convolutional neural network, hardware architecture type information, chip information, and device model number information.
(4) The information processing device according to any one of (1) to (3), wherein
   the transmitting section transmits the information related to the processing capability by GetCapability in a network of intelligent camera ecosystem (NICE) standard.
(5) The information processing device according to any one of (1) to (4), further comprising
   a receiving section that receives the neural network generated by the server device on a basis of the information related to the processing capability,
   a processing section that processes the received neural network, and
   a measuring section that measures a processing time of the neural network, wherein
   the transmitting section transmits the processing time to the server device.
(6) The information processing device according to (5), wherein
   the receiving section receives the neural network generated again by the server device.
(7) The information processing device according to (5), wherein
   the receiving section receives the neural network generated by additional learning by the server device.
(8) An information processing device comprising:
   a receiving section that receives information related to a processing capability of an edge device for processing a neural network;
   a generating section that generates the neural network suitable for the edge device on a basis of the received information related to the processing capability; and
   a transmitting section that transmits the generated neural network to the edge device.
(9) The information processing device according to (8), wherein
   the information related to the processing capability includes at least one of capacity information of the neural network, filter size information of a favorite convolutional neural network, hardware architecture type information, chip information, and device model number information.
(10) The information processing device according to (8), wherein
   the information related to the processing capability includes all of capacity information of the neural network, filter size information of a favorite convolutional neural network, hardware architecture type information, chip information, and device model number information.
(11) The information processing device according to any one of (8) to (10), wherein
   the receiving section receives the information that is related to the processing capability and transmitted by GetCapability in a network of intelligent camera ecosystem (NICE) standard.
(12) The information processing device according to any one of (8) to (11), wherein
   the receiving section receives a processing time of the neural network which processing time is measured by the edge device.
(13) The information processing device according to any one of (8) to (12), wherein
   the generating section changes a generation condition of the neural network and generates the neural network suitable for the edge device again in a case where a processing time of the neural network by the edge device is longer than a target value, and
   the transmitting section transmits the neural network generated again to the edge device.
(14) The information processing device according to (13), wherein
   the generating section repeats changing the generation condition of the neural network and generating the neural network suitable for the edge device until the processing time becomes equal to or shorter than the target value.
(15) The information processing device according to any one of (8) to (14), wherein
   the generating section additionally learns the neural network suitable for the edge device.
(16) The information processing device according to any one of (8) to (15), further comprising
   a processing section that calculates a processing time of the neural network suitable for the edge device.
(17) An information processing system comprising:
   an edge device that transmits information related to a processing capability for processing a neural network; and
   a server device that receives the information related to the processing capability, generates the neural network suitable for the edge device on a basis of the received information related to the processing capability, and transmits the generated neural network to the edge device.
(18) An information processing method comprising:
   transmitting information related to a processing capability for processing a neural network, the transmitting being performed by an edge device; and
   receiving the information related to the processing capability, generating the neural network suitable for the edge device on a basis of the received information related to the processing capability, and transmitting the generated neural network to the edge device, the receiving, generating, and transmitting being performed by a server device.
(19) A computer-readable recording medium recording a program for causing a computer to execute
   transmitting information related to a processing capability for processing a neural network to a server device that generates the neural network.
(20) A computer-readable recording medium recording a program for causing a computer to execute
   receiving information related to a processing capability of an edge device that processes a neural network;
   generating the neural network suitable for the edge device on a basis of the received information related to the processing capability; and
   transmitting the generated neural network to the edge device.
(21) An information processing system including the information processing device according to any one of (1) to (16).
(22) An information processing method using the information processing device according to any one of (1) to (16).
(23) A computer-readable recording medium recording a program for causing a computer to function as the information processing device according to any one of (1) to (16).

### Reference Signs List

- 1: INFORMATION PROCESSING SYSTEM
- 10: SERVER DEVICE
- 11: CONTROL SECTION
- 11a: CPU
- 11b: ROM
- 11c: RAM
- 11d: NONVOLATILE MEMORY SECTION
- 11e: BUS
- 12: INPUT/OUTPUT INTERFACE
- 13: INPUT SECTION
- 14: DISPLAY SECTION
- 15: SOUND OUTPUT SECTION
- 16: STORAGE SECTION
- 17: COMMUNICATION SECTION
- 18: DRIVE
- 18a: REMOVABLE RECORDING MEDIUM
- 20: EDGE DEVICE
- 21: SENSOR SECTION
- 22: PROCESSING SECTION
- 23: STORAGE SECTION
- 24: COMMUNICATION SECTION
- 30: COMMUNICATION NETWORK

## Claims

1. An information processing device comprising: a transmitting section that transmits, to a server device that generates a neural network, information related to a processing capability for processing the neural network supplied from the server device.

2. The information processing device according to claim 1, wherein
the information related to the processing capability includes at least one of capacity information of the neural network, filter size information of a favorite convolutional neural network, hardware architecture type information, chip information, and device model number information.

3. The information processing device according to claim 1, wherein
the information related to the processing capability includes all of capacity information of the neural network, filter size information of a favorite convolutional neural network, hardware architecture type information, chip information, and device model number information.

4. The information processing device according to claim 1, wherein
the transmitting section transmits the information related to the processing capability by GetCapability in a network of intelligent camera ecosystem (NICE) standard.

5. The information processing device according to claim 1, further comprising
a receiving section that receives the neural network generated by the server device on a basis of the information related to the processing capability,
a processing section that processes the received neural network, and
a measuring section that measures a processing time of the neural network, wherein
the transmitting section transmits the processing time to the server device.

6. The information processing device according to claim 5, wherein
the receiving section receives the neural network generated again by the server device.

7. The information processing device according to claim 5, wherein
the receiving section receives the neural network generated by additional learning by the server device.

8. An information processing device comprising:
a receiving section that receives information related to a processing capability of an edge device for processing a neural network;
a generating section that generates the neural network suitable for the edge device on a basis of the received information related to the processing capability; and
a transmitting section that transmits the generated neural network to the edge device.

9. The information processing device according to claim 8, wherein
the information related to the processing capability includes at least one of capacity information of the neural network, filter size information of a favorite convolutional neural network, hardware architecture type information, chip information, and device model number information.

10. The information processing device according to claim 8, wherein
the information related to the processing capability includes all of capacity information of the neural network, filter size information of a favorite convolutional neural network, hardware architecture type information, chip information, and device model number information.

11. The information processing device according to claim 8, wherein
the receiving section receives the information that is related to the processing capability and transmitted by GetCapability in a network of intelligent camera ecosystem (NICE) standard.

12. The information processing device according to claim 8, wherein
the receiving section receives a processing time of the neural network which processing time is measured by the edge device.

13. The information processing device according to claim 8, wherein
the generating section changes a generation condition of the neural network and generates the neural network suitable for the edge device again in a case where a processing time of the neural network by the edge device is longer than a target value, and
the transmitting section transmits the neural network generated again to the edge device.

14. The information processing device according to claim 13, wherein
the generating section repeats changing the generation condition of the neural network and generating the neural network suitable for the edge device until the processing time becomes equal to or shorter than the target value.

15. The information processing device according to claim 8, wherein
the generating section additionally learns the neural network suitable for the edge device.

16. The information processing device according to claim 8, further comprising
a processing section that calculates a processing time of the neural network suitable for the edge device.

17. An information processing system comprising:
an edge device that transmits information related to a processing capability for processing a neural network; and
a server device that receives the information related to the processing capability, generates the neural network suitable for the edge device on a basis of the received information related to the processing capability, and transmits the generated neural network to the edge device.

18. An information processing method comprising:
transmitting information related to a processing capability for processing a neural network, the transmitting being performed by an edge device; and
receiving the information related to the processing capability, generating the neural network suitable for the edge device on a basis of the received information related to the processing capability, and transmitting the generated neural network to the edge device, the receiving, generating, and transmitting being performed by a server device.

19. A computer-readable recording medium recording a program for causing a computer to execute
transmitting information related to a processing capability for processing a neural network to a server device that generates the neural network.

20. A computer-readable recording medium recording a program for causing a computer to execute
receiving information related to a processing capability of an edge device that processes a neural network;
generating the neural network suitable for the edge device on a basis of the received information related to the processing capability; and
transmitting the generated neural network to the edge device.
